Europäisches Patentamt

European Patent Office

Office européen des brevets

(11) Veröffentlichungsnummer: **0 027 530**
**B1**

(12) **EUROPÄISCHE PATENTSCHRIFT**

(45) Veröffentlichungstag der Patentschrift: **19.12.84**

(21) Anmeldenummer: **80105287.9**

(22) Anmeldetag: **04.09.80**

(51) Int. Cl.³: **G 01 P 1/10,** G 01 P 3/486, G 01 H 9/00

(54) **Optische Anordnung zum Überwachen kritischer Drehzahlen rotierender Einrichtungen.**

(30) Priorität: **12.09.79 DE 2936893**

(43) Veröffentlichungstag der Anmeldung:
**29.04.81 Patentblatt 81/17**

(45) Bekanntmachung des Hinweises auf die
Patenterteilung:
**19.12.84 Patentblatt 84/51**

(84) Benannte Vertragsstaaten:
**FR GB IT**

(56) Entgegenhaltungen:
**GB-A-1 388 705**
**US-A-3 532 181**
**US-A-4 080 823**

**NATURE, Band 222, Nr. 5192, 3. Mai 1969,
Seiten 475-476, Basingstoke, G.B., Q.V. DAVIS
et al.: "Vibrations of turbine blades measured
by means of a laser"**

(73) Patentinhaber: **Siemens Aktiengesellschaft
Berlin und München Wittelsbacherplatz 2
D-8000 München 2 (DE)**

(72) Erfinder: **Fromm, Ingrid, Dipl.-Phys.
Jawlenskystrasse 10
D-8000 München 71 (DE)**

Courier Press, Leamington Spa, England.

**Beschreibung**

Die vorliegende Erfindung betrifft eine optische Anordnung zum Überwachen kritischer Drehzahlen rotierender Einrichtungen, bei der an einem zu überwachenden Rotor zumindest ein Reflektor in der Nähe des Umfanges des Rotors angeordnet ist, wobei in einem Abstand und unter einem vorbestimmten Einfallswinkel zu dem Reflektor eine Lichtquelle oder das Ende eines Lichtwellenleiters angeordnet ist, die oder der einen Eingangsstrahl in Richtung des Reflektors sendet, und wobei ein weiterer Lichtwellenleiter in einem vorbestimmten Abstand und unter einem vorbestimmten Ausfallswinkel in bezug auf den Reflektor so angeordnet ist, daß ein Ausgangsstrahl, der durch Reflexion am Reflektor entsteht, auf die Eingangsstirnfläche des weiteren Lichtwellenleiters trifft.

Bei schnell bewegten Rotoren, wie beispielsweise Turbinen, Zentrifugen, Maschinenwellen usw., tritt häufig das Problem auf, daß eine bestimmte kritische Drehzahl nicht überschritten werden darf oder die Einrichtung nicht im Bereich einer kritischen Drehzahl betrieben werden darf.

Bisher bekannte Methoden zur Drehzahlmessung bzw. Drehzahlüberwachung bedienen sich entweder rein mechanischer oder elektromagnetischer Hilfsmittel. Die Meßverfahren mittels rein mechanischer Hilfsmittel haben bekannte Nachteile, wie relativ hoher Verschleiß und damit kurze Lebensdauer, und darüber hinaus den Nachteil, daß sie aufgrund der notwendigen mechanischen Kopplung mit dem zu überwachenden Rotor jeweils ausschließlich am Standort der zu überwachenden Einrichtung installiert sein müssen. Elektromagnetische Drehzahlmeßverfahren haben zwar den Vorteil gegenüber rein mechanischen Drehzahlmeßverfahren, daß sie nicht im Hinblick auf ihre räumliche Anordnung an den Aufstellungsort der zu überwachenden Maschine gebunden sein müssen. Es kann aber in bestimmten Fällen nachteilig sein, daß zwischen der zu überwachenden Einrichtung und der messenden und/oder anzeigenden Einrichtung eine elektrische Verbindung besteht.

Aus der GB—A—1 312 797 ist bereits eine optische Anordnung zum Überwachen kritischer Drehzahlen rotierender Einrichtungen gemäß der eingangs genannten Art bekannt. In dieser bekannten Vorrichtung ist vorgesehen, daß der optische Teil der Drehzahlüberwachungsmittel über elektrische Verbindungen mit einer Auswerteeinrichtung verbunden ist.

Aus der CH—A—555 573 ist eine Warnanlage in einem Kraftfahrzeug zur Signalisierung von Geschwindigkeitsüberschreitungen bekannt, bei der in einer Meßeinrichtung eine Umwandlung eines von dieser erzeugten elektrischen Warnsignals in ein akustisches Signal vorgesehen ist. Diese elektrisch relativ aufwendige Einrichtung bedingt in jedem Falle eine elektrische Verbindung zwischen den Drehzahlüberwachungsmitteln und der Auswerteeinrichtung.

Der vorliegenden Erfindung liegt die Aufgabe zugrunde, eine optische Anordnung zum Überwachen kritischer Drehzahlen rotierender Einrichtungen zu schaffen, die die Nachteile bekannter Einrichtungen nicht aufweist. Es soll eine verschleißfreie Anordnung zur Verfügung gestellt werden, die weder an den Aufstellungsort der zu überwachenden Einrichtung gebunde ist noch eine elektrische Verbindung mit der zu überwachenden Einrichtung benötigt.

Die erfindungsgemäße optische Anordnung zum Überwachen kritischer Drehzahlen rotierender Einrichtungen gemäß der eingangs genannten Art und nach dem Oberbegriff des Hauptanspruches ist dadurch gekennzeichnet, daß an den weiteren Lichtwellenleiter ein an sich bekannter optoakustischer Wandler angeschlossen ist und daß der optoakustische Wandler mit einem Resonator versehen ist, der eine Eigenresonanz aufweist, die an die durch die kritische Drehzahl hervorgerufenen Pulsfrequenz des Ausgangsstrahls angepaßt ist.

Die erfindungsgemäße optische Anordnung hat den Vorteil, daß keine mechanisch bewegten Teile benötigt werden, daß zwischen der zu überwachenden Einrichtung und der optischen Anordnung keinerlei elektrische Verbindung benötigt wird und daß die optische Anordnung an einem von dem Rotor entfernten Ort, insbesondere in einem Kontrollraum, angeordnet sein kann.

Weiterbildungen der Erfindung sind durch die in den Unteransprüchen angegebenen Merkmale gekennzeichnet.

Im folgenden wird die Erfindung anhand einer ein Ausführungsbeispiel für die Erfindung betreffenden Figur näher erläutert.

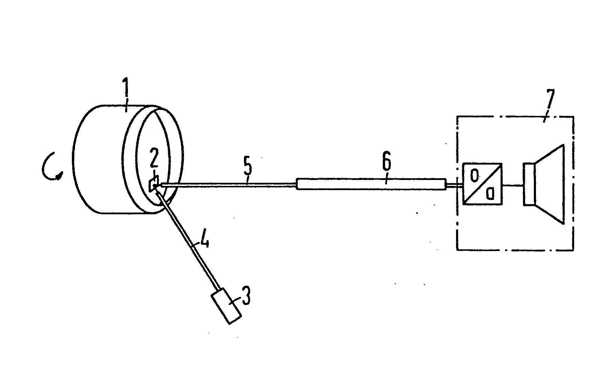

Die Figur zeigt den schematischen Aufbau der erfindungsgemäßen optischen Anordnung mit einem an dem zu überwachenden Rotor 1 angeordneten Reflektor 2, einer Lichtquelle 3, die über einen Eingangsstrahl 4 und einen Ausgangsstrahl 5 über einen Lichtwellenleiter 6 auf einen optoakustischen Wandler 7 wirkt. Der Reflektor 2 kann entweder als Spiegel oder als Glasprisma realisiert sein. An diesem Reflektor 2 wird der Eingangsstrahl 4 jeweils in einer bestimmten Drehstellung des Rotors 1 reflektiert. Diese Reflexion erfolgt entsprechend der Rotorbewegung, wobei das reflektierte Licht ein der Drehzahl des Rotors entsprechend gepulstes Licht darstellt. Dieses gepulste Licht wird über den Lichtwellenleiter 6 an den optoakustischen Wandler 7 geliefert.

Der optoakustische Wandler ist an sich bekannt, vergl. DT—AS 26 39 822.

Die Lichtquelle 3 ist in dem gezeigten Ausführungsbeispiel als Kohärenzlichtquelle, nämlich als Laserdiode, realisiert.

Eine Weiterbildung der Erfindung sieht vor, daß die Lichtquelle 3 als Inkohärenzlichtquelle, beispielsweise als lichtemittierende Diode LED, realisiert ist.

Die Lichtquelle 3 kann gemäß der Erfindung entweder ein Dauerlicht abgeben oder entsprechend der kritischen Drehzahl der zu überwachenden Einrichtung und der gewünschten Frequenz des von dem optoakustischen Wandler abzugebenden Warntons gepulstes Licht abgeben. Der optoakustische Wandler ist mit einem Resonator versehen. Dieser Resonator weist eine Eigenresonanz auf, die an die durch die kritische Drehzahl hervorgerufene Pulsfrequenz des Ausgangsstrahls angepaßt ist. Dazu wird zweckmäßig das Gaskammervolumen des an sich bekannten optoakustischen Wandlers so gewählt, daß seine Eigenresonanz mit der kritischen Frequenz zusammenfällt. Es kann auch gemäß der Erfindung ein Helmholtz-Resonator vorgesehen sein, dessen Eigenresonanz mit der kritischen Frequenz zusammenfällt. Der auf diese kritische Frequenz abgestimmte Resonator dient zur akustischen Verstärkung des abzugebenden Warntons.

Der Lichtwellenleiter 6 kann erfindungsgemäß entweder aus einem Einfaser- oder aus einem Mehrfaserlichtwellenleiter bestehen.

Die vorliegende Erfindung zeichnet sich durch ihre besondere Einfachheit, ihre Verschleißfestigkeit und dadurch aus, daß keinerlei elektrische Verbindungen zwischen den betreffenden Maschinenraum und einem ggfs. vorhandenen Kontrollraum bestehen muß.

Gemäß der vorliegenden Erfindung ist in einem anderen Ausführungsbeispiel vorgesehen, daß mehrere Reflektoren gleichmäßig verteilt auf dem Rotor angebracht sind, so daß eine günstige Abstimmung zwischen der betreffenden kritischen Drehzahl und dem Resonanzverhalten des optoakustischen Wandlers und/oder dem zugehörigen Resonator ermöglicht ist.

**Patentansprüche**

1. Optische Anordnung zum Überwachen kritischer Drehzahlen rotierender Einrichtungen, bei der an einem zu überwachenden Rotor (1) zumindest ein Reflektor (2) in Nähe des Umfanges des Rotors (1) angeordnet ist, wobei in einem Abstand und unter einem vorbestimmten Einfallswinkel zu dem Reflektor (2) eine Lichtquelle (3) oder das Ende eines Lichtwellenleiters angeordnet ist, die oder der einen Eingangsstrahl (4) in Richtung des Reflektors (2) sendet, und wobei ein weiterer Lichtwellenleiter (6) in einem vorbestimmten Abstand und unter einem vorbestimmten Ausfallswinkel in bezug auf den Reflektor (2) so angeordnet ist, daß ein Ausgangsstrahl (5), der durch Reflexion am Reflektor (2) entsteht, auf die Eingangsstirnfläche des weiteren Lichtwellenleiters (6) trifft, dadurch gekennzeichnet, daß an den weiteren Lichtwellenleiter (6) ein an sich bekannter optoakustischer Wandler (7) angeschlossen ist und daß der optoakustische Wandler (7) mit einem Resonator versehen ist, der eine Eigenresonanz aufweist, die an die durch die kritische Drehzahl hervorgerufenen Pulsfrequenz des Ausgangsstrahls (5) angepaßt ist.

2. Optische Anordnung nach Anspruch 1, dadurch gekennzeichnet, daß die Lichtquelle (3) Dauerlicht abgibt.

3. Optische Anordnung nach Anspruch 1, dadurch gekennzeichnet, daß die Lichtquelle (3) entsprechend der kritischen Drehzahl und der gewünschten Frequenz des Warntons gepulstes Licht abgibt.

**Revendications**

1. Dispositif optique pour contrôler les vitesses de rotation critiques d'installations rotatives, dans lequel au moins un réflecteur (2) est fixé sur un rotor (1) à contrôler, dans le voisinage de la périphérie de ce dernier, une source lumineuse (3) ou l'extrémité d'un guide d'onde de lumière étant disposée à une certaine distance et avec un angle d'incidence prédéterminé par rapport au réflecteur et renvoyant un rayon incident (4) en direction du réflecteur (2), alors qu'un quide d'onde de lumière supplémentaire (6) est disposé à une certaine distance et avec un angle de réflexion prédéterminé par rapport au réflecteur (2) de manière qu'un rayon réfléchi (5) formé par réflexion au niveau du réflecteur (2) vienne frapper la surface frontale d'entrée du guide d'onde supplémentaire (6), caractérisé par le fait qu'au guide d'onde de lumière supplémentaire (6) est relié un transducteur optoacoustique connu (7) et que celui-ci est pourvu d'un résonateur possédant une résonance propre qui est adaptée à la fréquence impulsionnelle du rayon réfléchi, provoquée par la vitesse de rotation critique.

2. Dispositif optique selon la revendication 1, caractérisé par le fait que la source lumineuse (3) émet une lumière ininterrompue.

3. Dispositif optique selon la revendication 1, caractérisé par le fait que la source lumineuse (3) émet une lumière impulsionnelle correspondant à la vitesse de rotation critique et à la fréquence souhaitée du son avertisseur.

**Claims**

1. An optical arrangement for monitoring critical speeds of rotating devices, wherein there is arranged at a rotor (1) to be monitored at least one reflector (2) in the vicinity of the periphery of the rotor (1), where a light source (3) or the end of a light waveguide is arranged at a distance and at a predetermined angle of incidence to the reflector (2) to transmit an input beam (4) in the direction of the reflector (2), and where a further light waveguide (6) is arranged at a predetermined distance and at a predetermined angle of reflection in relation to the reflector (2) in such a manner that an output beam (5) produced by reflection from the reflector (2), is incident upon the input end face of the further light waveguide (6), characterised in that an opto-acoustic transducer (7), known per se, is connected to the further light waveguide (6), and that the opto-acoustic transducer (7) is provided with a resonator having a natural resonance matched to the pulse frequency of the output beam (5) produced at the critical speed.

2. An optical arrangement as claimed in Claim 1, characterised in that the light source (3) emits a constant light.

3. An optical arrangement as claimed in Claim 1, characterised in that the light source (3) emits light pulsed in accordance with the critical speed and the required frequency of the warning signal.